## Europäisches Patentamt

## European Patent Office

## Office européen des brevets

(19)

(11) Veröffentlichungsnummer: **0 257 245**
A2

(12) # EUROPÄISCHE PATENTANMELDUNG

(21) Anmeldenummer: 87109569.1

(22) Anmeldetag: 03.07.87

(51) Int. Cl.⁴: **G 11 B 5/127**

(30) Priorität: 29.08.86 DE 3629519

(43) Veröffentlichungstag der Anmeldung: 02.03.88
**Patentblatt 88/9**

(84) Benannte Vertragsstaaten: **AT DE FR GB IT**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Eberle, Karl, Dipl.-Ing. GRUNDIG E.M.V., Elek.-Mech. Max Grundig Holländ Stiftung Co.KG, Kurgartenstrasse 37 D-8510 Fürth/Bay (DE)**
Erfinder: **Gukkenberger, Horst, Dipl.-Ing. GRUNDIG E.M.V., Elek.-Mech. Max Grundig Holländ Stiftung Co.KG, Kurgartenstrasse 37 D-8510 Fürth/Bay (DE)**
Erfinder: **Weigel-Krengel, Karola, Dipl.-Ing. GRUNDIG E.M.V., Elek.-Mech. Max Grundig Holländ Stiftung Co.KG, Kurgartenstrasse 37 D-8510 Fürth/Bay (DE)**

(54) **Verfahren zur Herstellung eines Magnetkopfes für ein Video-Magnetbandgerät.**

(57) Beschrieben ist ein Verfahren zur Herstellung eines Magnetkopfes, insbesondere Video-Magnetkopfes, bei dem zwei weichmagnetische Kernhälften aus amorphem Metall über einen unmagnetischen Arbeitsspalt verbunden und die Kernhälften beidseitig von Kernträgern aus Ferrit gestützt sind. Die Verbindung der Kernhälften mit den Kernträgern zu einem Kernverbund erfolgt durch Anschmelzen einer dünnen niedrigschmelzenden Glasschicht, die auf den Kernhälften aufgesputtert ist. Der Verbindungsvorgang erfolgt bei gleichzeitigem Einwirken von Temperatur und Druck.

# VERFAHREN ZUR HERSTELLUNG EINES MAGNETKOPFES FÜR EIN VIDEO-MAGNETBANDGERÄT

## BESCHREIBUNG

Die Erfindung betrifft ein Verfahren zur Herstellung eines Magnetkopfes für ein Video-Magnetbandgerät, bei dem zwei weichmagnetische Kernhälften aus amorphem Metall über einen unmagnetischen Arbeitsspalt verbunden sind, bei dem die Kernhälften beidseitig von je zwei Kernträgern aus weichmagnetischem Ferrit gestützt sind, und bei dem jeder der Kernträger im Spaltbereich eine Einlage aus unmagnetischem Material, z.B. eine Glaseinlage aufweist, sowie Spulenwindungen um mindestens eine Kernhälfte gewickelt sind.

Bei Video-Magnetbandgeräten werden Magnetköpfe mit kleinen Spurbreiten sowie kleinen Spaltbreiten und insgesamt sehr kleinen Abmessungen in großer Stückzahl

2

verwendet. Die Schwierigkeiten bei der Herstellung
eines derart kleinen Magnetkopfes bestehen darin, den
Magnetkopf (Videokopf) preisgünstig zu fertigen und
dem mit einem Arbeitsspalt versehenen Ringkern eine
ausreichende mechanische Stabilität zu geben. Es ist
ein Aufbau mit den dazugehörigen Herstellungsverfahren
für einen Magnetkopf mit amorphmetallischen Kernhälften
bekannt, dessen mechanische Stabilität durch
unmagnetische Kernträger und einen sämtliche Kopfteile
zusammenhaltenden Bindekörper erreicht wird. Der
unmagnetische Arbeitsspalt trennt die beiden
Kernhälften. Die eine Kernhälfte weist einen Freiraum
auf, der mit Spulenwindungen versehen ist. Die
Kernhälften sind mit den Kernträgern durch
Verbindungsschichten verbunden. Diese Schichten bestehen
vorzugsweise aus einem Silikonharz, das bereits bei
niedriger Temperatur aushärtet.

Nachteilig ist bei der Verwendung eines derartigen
Bindemittels, daß die Klebeverbindungen nicht
ausreichend stabil sind, und daher insbesondere bei
der Weiterverarbeitung des Kernverbundes, sowie durch
Temperatur- und Feuchtigkeitsschwankungen sich
Verschiebungen der Kernteile ergeben.

Aufgabe der Entwicklung ist es daher, ein Verfahren
zur Herstellung eines Magnetkopfes für ein Video-
Magnetbandgerät zu finden, bei dem die
Verbindungsschicht zwischen den Kernhälften und den

3

Kernträgern derart beschaffen ist, daß der durch das Verbinden entstandene Kernverbund in seiner mechanischen Stabilität allen Bearbeitungs- und Betriebsanforderungen voll entspricht.

Diese Aufgabe wird erfindungsgemäß durch die im Kennzeichen des Patentanspruchs 1 angegebenen Verfahrensschritte gelöst.

Anhand einer perspektivischen Zeichnung wird an einem Beispiel gezeigt, wie der komplette Magnetkern als Kernverbund des Magnetkopfes aus einzelnen Teilen zusammengelötet ist. Der Magnetkern in Form eines Kernverbundes 1 besteht aus den beiden Kernhälften 2a, 2b, die aus amorphem Metall in Folienform gefertigt sind, und aus den beidseitig zu den Kernhälften angeordneten Kernträgern 3a, 3b und 4a, 4b, die aus weichmagnetischem Ferrit bestehen. Die Kernhälften und im dargestellten Beispiel auch die Kernträger sind über einen unmagnetischen Arbeitsspalt 5 verbunden. Die Kernträger weisen im Spaltbereich eine Glaseinlage 6 auf. Zwischen den Kernhälften und den Kernträgern befindet sich je eine Glasschicht 7, die die Teile mechanisch stabil verbindet. Die Glasschicht ist sehr dünn und wird vorzugsweise nur auf die Kernhälften aufgesputtert. Die Kernhälften werden bedarfsweise vorbehandelt, so wird vor dem Aufbringen der Glasschicht eine Haftschicht, z.B. aus Ti aufgedampft.

4

Das Zusammenfügen der entsprechend vorbehandelten Teile (Aufbringen der Haftschicht und Aufbringen der dünnen Glasschicht) erfolgt vorzugsweise in einem Stapel, der durch wechselweises Schichten von Kernhälften und Kernträgern gebildet wird. Der Stapel wird erhitzt und bei Erreichen der vorgesehenen Maximaltemperatur, die dem Erweichungspunkt der dünnen Glasschicht auf den Kernhälften entspricht, wird der Stapel einem hohen Druck ausgesetzt und somit zusammengepreßt. Nach gleitender Rücknahme von Druck und Temperatur sind die Teile des Stapels glasverlötet. Der Stapel wird anschließend entsprechend bearbeitet, so werden Ausnehmungen für die Glaseinlagen 6 und die nicht gezeichnete Drahtspule eingebracht, sowie die Spaltfläche bearbeitet. Die so aus dem Stapel entstandene Kernblockhälfte wird unter Bildung eines unmagnetischen Arbeitsspaltes mit einer weiteren Kernblockhälfte zu einem Gesamtblock zusammengefügt (gelötet) und aus diesem Gesamtblock werden scheibchenweise einzelne Kernverbundteile abgetrennt. Anschließend erfolgt die Kopfspiegelbearbeitung und das Einbringen der Drahtwindungen.

l

VERFAHREN ZUR HERSTELLUNG EINES MAGNETKOPFES
FÜR EIN VIDEO-MAGNETBANDGERÄT


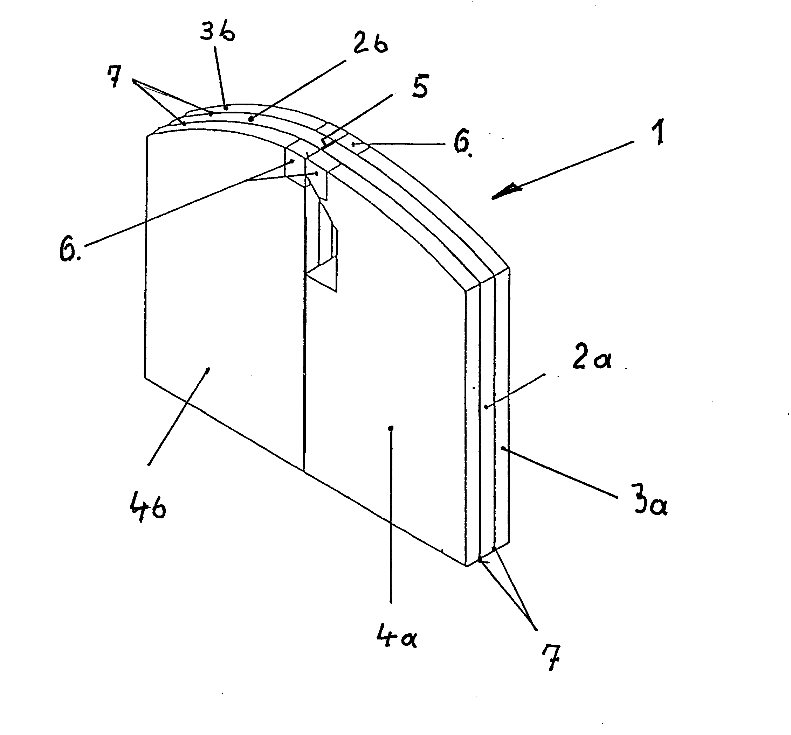

PATENTANSPRÜCHE


1. Verfahren zur Herstellung eines Magnetkopfes für
ein Video-Magnetbandgerät, bei dem zwei weichmagnetische
Kernhälften aus amorphem Metall über einen
unmagnetischen Arbeitsspalt verbunden sind, bei dem
die Kernhälften beidseitig von je zwei Kernträgern aus
weichmagnetischem Ferrit gestützt sind, und bei dem
jeder der Kernträger im Spaltbereich eine Einlage aus
unmagnetischem Material, z. B. einer Glaseinlage
aufweist, sowie Spulenwindungen um mindestens eine
Kernhälfte gewickelt sind,
d a d u r c h   g e k e n n z e i c h n e t ,   daß die
Kernhälften (2a, 2b) mit den Kernträgern (3a, 3b und
4a, 4b) durch folgende Verfahrensschritte verbunden
sind;

- daß auf die Flachseite der Kernhälften (2a, 2b)
  beidseitig eine Haftschicht aufgebracht wird,

2

00257245

2

- daß auf der Flachseite zwischen den Kernhälften
  und den Kernträgern auf den Kernhälften und/oder
  auf den Kernträgern eine bei niedriger Temperatur
  schmelzende dünne Glasschicht (7) aufgebracht wird,
- daß durch eine vorgegebene Temperatur, die unter
  der Rekristallisationstemperatur der amorphen
  Folie der Kernhälften liegt, die Glasschicht
  erweicht und durch Druck die Kernträger mit den
  Kernhälften zu einem Kernverbund (1)
  zusammengelötet sind.

2. Verfahren zur Herstellung eines Magnetkopfes nach
Anspruch 1, dadurch gekennzeichnet, daß die bei
niedriger Temperatur ($<400\,^{\circ}$) schmelzende dünne
Glasschicht durch Bedampfen, vorzugsweise durch Sputtern
aufgebracht wird.

3. Verfahren zur Herstellung eines Magnetkopfes nach
den Ansprüchen 1 und 2, dadurch gekennzeichnet, daß
die auf beide Flachseiten der Kernhälften aufgebrachte
Haftschicht aus $SiO_2$ oder $TiO_2$ oder Ag oder Ti besteht
und durch Bedampfen oder Sputtern aufgebracht ist.

4. Verfahren zur Herstellung eines Magnetkopfes nach
den Ansprüchen 1 bis 3, dadurch gekennzeichnet, daß das
Verbinden der Kernhälften mit den Kernträgern nach
einem Block-Schichtverfahren erfolgt, und der einzelne
Kernverbund (1) vom Gesamtblock scheibchenweise
abgetrennt wird.

3

00257245